# FASCICULE DE BREVET EUROPEEN

(11) **EP 1 625 098 B1**
(45) Date de publication et mention de la délivrance du brevet: **08.08.2018**
(21) Numéro de dépôt: 04742682.0
(22) Date de dépôt: 07.05.2004
(51) Int. Cl.: C03B 7/06, F23D 14/32, F23D 14/78

(54) **PROCÉDÉ DE CONTRÔLE DE BRÛLEURS OXY-COMBUSTIBLE PAR INJECTION D'UN GAZ ADDITIONNEL**
VERFAHREN ZUM REGELN VON OXYFUEL-BRENNERN DURCH EINSPRITZUNG VON EINEM ZUSATZGAS
OXY-FUEL BURNER CONTROL METHOD INVOLVING THE INJECTION OF AN ADDITIONAL GAS

(30) Priorité: 13.05.2003 FR 0305735
(43) Date de publication de la demande: 15.02.2006
(73) Titulaire: L'AIR LIQUIDE, Société Anonyme pour l'Etude et l'Exploitation des Procédés Georges Claude, 75007 Paris (FR)
(72) Inventeur: GIANG, Son-Ha, F-94370 Sucy en Brie (FR); LE GOUEFFLEC, Gérard c/o L'Air Liquide, F-75321 Paris cedex 07 (FR); ROBILLARD, Dominique, F-78000 Versailles (FR)
(74) Mandataire: De Vleeschauwer, Natalie Y.L.D.
(86) Numéro de dépôt international: PCT/FR2004/001124
(87) Numéro de publication internationale: WO 2004/101453

(56) Documents cités:
- EP-A- 0 877 203
- DE-U- 20 106 097
- US-A- 5 145 361
- US-A- 5 500 030
- US-B1- 6 431 467

## Description

La présente invention concerne un procédé de contrôle du fonctionnement d'un brûleur destiné à chauffer les canaux de distribution de verre liquide issu d'un four verrier.

Sur une ligne de fabrication continue de verre, la fusion du verre est assurée dans des fours de plus ou moins grande capacité qui délivrent en sortie du verre fondu. Pour certaines industries comme les fours de verres creux, le verre fondu doit être acheminé jusqu'aux machines de mise en forme du verre. Pour le transport de ce verre fondu, on utilise des canaux de distribution garnis de matériaux réfractaires, dénommés "feeder" "forehearths" en anglais. Au cours de ce cheminement, le verre est refroidi, il est également conditionné de manière à ce qu'en sortie des canaux de distribution, sa température soit parfaitement stable et homogène à plus ou moins 1°C près. La température du verre à la sortie des canaux de distribution doit donc pour cela être constante mais aussi parfaitement uniforme transversalement, c'est-à-dire sur la largeur de chaque canal.

Il est essentiel de contrôler le procédé de transfert thermique à la surface du verre sur toute la longueur du canal de distribution pour obtenir une réduction du gradient de température en sortie. Pour cela, il est courant d'équiper les canaux de distribution d'un dispositif de chauffage qui est obtenu par la combustion d'un mélange d'air et de gaz combustible au-dessus de la surface libre du courant de verre fondu. Cette combustion est obtenue à l'aide de brûleurs aéro-combustibles. Pendant l'écoulement du verre fondu, afin que la température du verre fondu soit à la fois abaissée et homogénéisée, des séries de brûleurs sont répartis tout au long du cheminement du verre fondu. Compte-tenu du nombre de brûleurs et de la difficulté de capter et contrôler les volumes de fumées qu'ils créent, la combustion peut être réalisée par des brûleurs dont le comburant est de l'air froid ; or, ces brûleurs présentent un rendement généralement médiocre et qui offrent peu de flexibilité en vue de l'obtention d'un bon profil thermique transversal.

Pour résoudre ces problèmes, la combustion d'un mélange d'air et de gaz combustible a été remplacée par la combustion d'un mélange d'oxygène et de gaz combustible à l'aide de brûleurs oxy-combustible. Cette modification a permis d'augmenter la capacité de production de verre, ainsi que le rendement de combustion et le transfert radiatif. De tels brûleurs sont par exemple décrits dans les documents US-B1-6,431,467 et US 5,500,030. Ces derniers brûleurs présentent notamment l'avantage d'avoir une plage de fonctionnement importante, c'est-à-dire une possibilité de variation de puissance - et donc des débits de combustible et de comburant - beaucoup plus grande que celle des brûleurs aéro-combustibles. En outre, la longueur de la flamme de ces brûleurs est constante dans toute leur plage de fonctionnement. Cette propriété leur permet de chauffer le bord des canaux de distribution, là où le verre se refroidit au contact des réfractaires. Ils permettent également de limiter le gradient thermique, et donc la différence de viscosité, entre le coeur du canal et les bords ; ainsi l'écoulement préférentiel du verre au centre du canal est limité. Par ailleurs, la puissance de chauffe d'une section de canal de distribution par combustion oxy-combustible ou avec de l'air enrichi en oxygène est supérieure à ce qui peut être atteint en combustion aéro-combustible. La grande plage de puissance dans laquelle les brûleurs oxy-combustible fonctionnent permet une régulation dynamique compensant rapidement les variations du procédé et stabilisant la température du verre. Les canaux de distribution peuvent être équipés sur toute leur longueur de plusieurs zones de chauffe, dans ce cas, les brûleurs oxy-combustible apportent une grande flexibilité de conduite grâce à une plus grande précision dans la régulation de la température. Si la totalité de la longueur du canal de distribution est équipée de brûleurs oxy-combustible, cette flexibilité de conduite est d'autant plus grande. En outre, la consommation de gaz est réduite. Les brûleurs oxy-combustible permettent également une réduction du volume des fumées, qui peut conduire dans certain cas à une diminution des envols et de la volatilisation de certains composants amenés dans les canaux de distribution, tels que les colorants.

Cependant, cette combustion oxy-combustible peut présenter certains inconvénients. Tout d'abord, la géométrie de la flamme des brûleurs des canaux de distribution est particulièrement importante, car il faut assurer un profil de chauffe du flux de verre particulièrement stable et uniforme. Or, la tenue thermique des matériaux constituant les brûleurs oxy-combustible auto-refroidis est généralement difficile car la température d'ambiance y est généralement élevée alors que les débits de gaz et d'oxygène sur chaque brûleur est faible (faible puissance unitaire). Ainsi, afin d'assurer un profil stable de flamme, on ne dispose pas d'autant de flexibilité de fonctionnement pour ces brûleurs que l'oxy-combustion le permet. De plus, le passage à bas régime des brûleurs peut être la source de défaillances de brûleurs nécessitant une maintenance. En effet, les brûleurs sont refroidis par convection avec le débit du comburant et du combustible qu'ils utilisent. Dans le cas de combustion à oxygène le volume des débits est environ 70 % inférieur à celui d'une combustion à l'air. Le refroidissement est donc moins efficace pour une même puissance. La flamme d'une combustion à l'oxygène est aussi plus chaude et rayonnante. De plus, à faible puissance, l'échauffement de l'embout du brûleur peut générer un craquage prématuré et a donc pour conséquence un encrassement rapide et une usure prématurée du brûleur. Enfin, les canaux de distribution doivent toujours être en surpression et cette pression est maintenue par le volume des fumées des brûleurs. En aérocombustion, ce volume est stabilisé, un jeu de trappes sur les évacuations de fumées permet d'ajuster la pression, qu'il convient de surveiller et réguler. En oxycombustion, le volume des fumées est beaucoup plus faible et, de plus, varie fortement avec la puissance, ce qui rend le contrôle de la pression dans les canaux de distribution difficile. On recherche donc un procédé stable en pression, indépendant des conditions de puissance instantanées. Le document DE 201 06 097 U divulgue un procédé de contrôle du fonctionnement d'un brûleur assurant le chauffage des canaux de distribution de verre liquide issu d'un four verrier selon le préambule de la revendication 1. Un but de la présente invention est de proposer un procédé de chauffage des canaux de distribution de verre à l'aide de brûleur oxy-combustible ne présentant pas les inconvénients précédents.

Un but de la présente invention est de proposer un procédé de chauffage des canaux de distribution de verre à l'aide de brûleur oxy-combustible flexible et facilement modifiable.

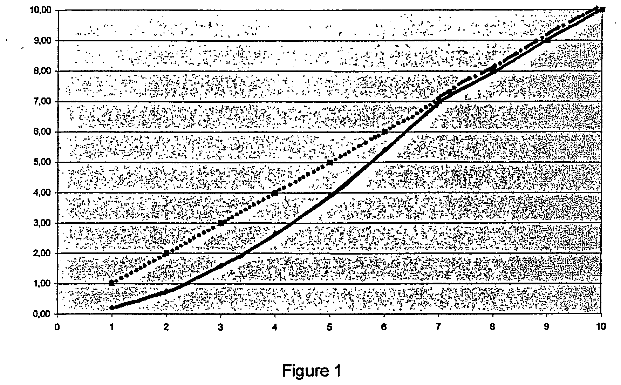

Dans ce but, l'invention concerne un procédé de contrôle du fonctionnement d'un brûleur assurant le chauffage des canaux de distribution de verre liquide issu d'un four verrier avec les caractéristiques de la revendication 1. Des autres caractéristiques particulières sont divulguées dans les revendications dépendantes. D'autres caractéristiques et avantages de l'invention apparaîtront à la lecture de la description qui va suivre. Des formes et des modes de réalisation de l'invention sont donnés à titre d'exemples non limitatifs, illustrés par la figure 1 représentant la plage de puissances obtenues avec le procédé et le système selon l'invention et avec le procédé de l'art antérieur.

L'invention concerne donc tout d'abord un procédé de contrôle du fonctionnement d'un brûleur assurant le chauffage des canaux de distribution de verre liquide issu d'un four verrier, ledit brûleur étant alimenté par un gaz combustible et de l'oxygène, dans lequel un gaz additionnel est injecté en complément de l'oxygène de manière à ce que la somme du débit de gaz additionnel, du débit d'oxygène et du débit de gaz combustible soit supérieure au débit minimal de refroidissement du brûleur D_{MIN}.

L'invention permet donc le contrôle du fonctionnement d'un brûleur oxycombustible. Par brûleur oxycombustible, on entend un brûleur mettant en oeuvre une oxycombustion obtenue par le mélange d'un combustible et d'oxygène. Par oxygène, on entend un gaz oxygéné comprenant plus de 90 % en volume d'oxygène. L'oxygène produit par un procédé VSA (adsorption à régénération sous vide) est particulièrement adapté. Selon la caractéristique essentielle de l'invention, un gaz additionnel est injecté dans le brûleur en complément de l'oxygène. Généralement, le gaz additionnel est mélangé avec l'oxygène avant sa mise en contact avec le combustible, par exemple dans une chambre de prémélange. La quantité de gaz additionnel injectée en complément de l'oxygène et du combustible permet un contrôle du fonctionnement du brûleur selon la règle suivante : la somme du débit de gaz additionnel, du débit d'oxygène et du débit de gaz combustible doit être supérieure au débit minimal de refroidissement du brûleur D_{MIN}. La valeur de D_{MIN} peut être fixée pour chaque type de brûleur en fonction du débit de combustible introduit dans le brûleur. Plus précisément, la valeur de D_{MIN} peut être fixée de la manière suivante : D_{MlN} doit être suffisant pour assurer le refroidissement du brûleur. Cette valeur du débit nécessaire au refroidissement est spécifique au brûleur utilisé ; elle est déterminable par un homme du métier en fonction de la température de tenue dudit brûleur. Cette température de tenue du brûleur est elle-même déterminée préalablement par des tests. En pratique, le débit de gaz additionnel peut être contrôlé par un détendeur inséré dans la ligne de délivrance de l'oxygène au brûleur et réglé pour délivrer un flux d'oxygène et de gaz additionnel de pression déterminée. Cette pression est fixée de manière à correspondre au débit minimum de gaz nécessaire pour assurer le refroidissement du brûleur. Ainsi, si le débit d'oxygène varie suite à une variation de débit du combustible et de manière à conserver un rapport stoechiométrique gaz combustible/oxygène fixé, le débit de gaz additionnel varie également pour compenser ou non la variation de débit d'oxygène dans le brûleur.

Selon un premier mode plus perfectionné du procédé, il est possible de faire varier le débit de gaz additionnel en fonction du débit d'oxygène et de gaz combustible par mesure permanente de ces deux derniers débits et ajustement du débit de gaz additionnel de manière à ce que la somme des débits d'oxygène, de gaz additionnel et de combustible soit supérieure à D_{MIN}.

Selon un deuxième mode particulier simplifié de l'invention, il suffit de s'assurer que la somme du débit de gaz additionnel et du débit d'oxygène est supérieure ou égale au débit minimal de refroidissement du brûleur D_{MIN}. A fortiori, la somme du débit de gaz additionnel, du débit d'oxygène et du débit de gaz combustible est également supérieure au débit minimal de refroidissement du brûleur D_{MIN}. La mise en oeuvre de ce mode particulier est plus simple puisqu'il ne s'agit plus que d'asservir le débit de gaz additionnel qu'à la mesure du débit d'oxygène, par exemple par un simple détendeur, sans tenir compte de la valeur du débit de gaz combustible. Le gaz additionnel peut être un gaz comburant différent de l'oxygène ou un gaz neutre vis-à-vis du combustible. Il s'agit de préférence d'au moins l'un des gaz suivants : air, dioxyde de carbone, argon, hélium, azote ou d'un mélange de ces gaz. L'air est généralement le mieux adapté par son faible coût et sa composition. Un gaz additionnel composé d'une quantité de l'ordre de 21 % en volume d'oxygène et d'au moins un autre gaz différent de l'oxygène est intéressant, car, d'une part, il est favorable à la combustion et, d'autre part, la quantité d'oxygène, qu'il introduit, peut se déduire de l'oxygène principal injecté pour la combustion du combustible. Selon l'invention, lors de la variation de la puissance du brûleur, les débits de combustible et d'oxygène augmentent ou diminuent proportionnellement de manière à conserver un rapport stoechiométrique prédéfini constant. Selon une variante du procédé, en fonction de la valeur du débit d'oxygène mis en oeuvre, le gaz additionnel est ajouté en complément de l'oxygène de manière à ce que le débit total en oxygène et gaz additionnel soit supérieur ou égal à D_{MIN}. De ce fait, le brûleur ne subit pas de détérioration à faible puissance, car malgré l'injection de débits faibles en oxygène et combustible, le gaz additionnel apporte le volume gazeux nécessaire au refroidissement du brûleur. Ce gaz additionnel permet également d'éviter l'encrassage de l'embout du brûleur par des dépôts de verre et sa détérioration En outre, le gaz additionnel crée un volume de fumées qui permet à l'opérateur d'obtenir et contrôler la surpression au sein des canaux de distribution. A forte puissance, le débit de gaz additionnel peut éventuellement s'annuler pour permettre un fonctionnement uniquement à l'oxygène. Dans ce cas, la somme du débit d'oxygène et du débit de gaz combustible est supérieur à D_{MIN}. Le procédé peut être mis en oeuvre par un brûleur du type décrit dans US 5,500,030. Ce type de brûleur comprend plus particulièrement :
- un premier conduit pour le passage de l'oxygène,
- un second conduit coaxial au premier conduit et placé à l'intérieur dudit premier conduit pour le passage du combustible.

Il est préférable que l'extrémité du second conduit soit placé en retrait de l'extrémité du premier conduit. Plus préférentiellement, on utilise des brûleurs de ce type dont le rapport du diamètre interne du premier conduit sur le diamètre interne du second conduit étant compris entre 2:1 et 8:1.

Selon une variante, le procédé peut être mis en oeuvre par un brûleur du type décrit dans US-B1-6,431,467. Ce type de brûleur comprend plus particulièrement :
- un premier conduit pour le passage de l'oxygène,
- un second conduit coaxial au premier conduit et placé à l'intérieur dudit premier conduit pour le passage du combustible,
- un embout placé à l'extrémité du premier conduit,
- une buse placée à l'extrémité du second conduit,
- un moyen permettant de faire tourbillonner le combustible placé sur la buse placée à l'extrémité du second conduit. Selon cette deuxième variante, le moyen permettant de faire tourbillonner le combustible peut comprendre un objet de forme allongée centré de manière aérodynamique à l'intérieur de la buse du second conduit, le diamètre interne de ladite buse étant supérieur au diamètre de l'objet de forme allongée du moyen permettant de faire tourbillonner le combustible. L'objet de forme allongée du moyen permettant de faire tourbillonner le combustible peut être constitué d'au moins une tige hélicoïdale sur une portion de sa longueur. Ce brûleur peut également comprendre un moyen permettant de faire tourbillonner le comburant placé sur l'embout placé à l'extrémité du premier conduit ; ce moyen permettant de faire tourbillonner le comburant peut être constitué d'un ressort hélicoïdal. Ce type de brûleur convient particulièrement à la mise en oeuvre du procédé de l'invention parce qu'il produit une flamme de longueur constante indépendamment des variations de puissance. Un système de combustion comprenant :
   - un brûleur oxy-combustible,
   - un moyen d'alimentation du brûleur en combustible,
   - un moyen d'alimentation du brûleur en comburant coopérant avec un moyen d'alimentation en oxygène et avec un moyen d'alimentation en un gaz additionnel,
   - un moyen de mesure du débit d'au moins de l'oxygène ou du combustible,
   - un moyen de contrôle du débit de gaz additionnel est divulgué.
Ce système de combustion permet de piloter de manière fine les évolutions de puissance du brûleur sans générer les inconvénients rencontrés sur ce type de brûleur. Ce système permet la mise en oeuvre du procédé de contrôle du fonctionnement du brûleur oxy-combustible tel que décrit précédemment. Généralement, le moyen de contrôle du débit de gaz additionnel est asservi au moyen de mesure du débit d'au moins de l'oxygène ou du combustible. Ce moyen de contrôle du débit de gaz additionnel peut être un détendeur ou une servo-valve : c'est-à-dire valve asservie à une commande. Lorsque le moyen de contrôle du débit de gaz additionnel est un détendeur, il suffit de le régler de manière à délivrer le gaz additionnel jusqu'à ce que la pression générée par ce gaz additionnel et l'oxygène délivré soit supérieure à la pression nécessaire pour obtenir le débit minimum de comburant D_{MIN}. Lorsque le moyen de contrôle du débit de gaz additionnel est une servo-valve, il est possible d'asservir l'ouverture du moyen d'alimentation en gaz additionnel à l'une des commandes suivantes : en fonction de la valeur du débit d'oxygène ou en fonction de la valeur du débit de combustible, compte-tenu de la valeur du rapport stoechiométrique oxygène/combustible fixé. Selon une mise en oeuvre particulière, où le gaz additionnel est de l'air, la servo-valve peut prendre en compte l'apport en oxygène de l'air dans le calcul du rapport stoechiométrique oxygène/combustible ; cette mise en oeuvre permet d'économiser la consommation en oxygène.

Le graphique de la figure 1 illustre les plages de puissances obtenues avec le procédé et le système selon l'invention et avec le procédé selon l'art antérieur. Pour le système selon l'invention (courbe en trait plein) et le brûleur oxycombustible selon l'art antérieur (courbe en pointillés de types : ..... et ._._._), les courbes donnent la puissance (en kW) qu'il est possible de transférer en fonction de la puissance développée (en kW). La puissance développée est la puissance créée par la combustion stoechiométrique à l'aide d'un comburant ne comprenant que de l'oxygène. La puissance transférée est la puissance qui est effectivement transférée au verre. Dans le cas d'une oxy-combustion à l'aide d'un comburant ne comprenant que de l'oxygène (brûleur oxy-combustible selon l'art antérieur), on observe que la puissance transférée correspond à la puissance développée. Pour la combustion à l'aide du comburant comprenant l'oxygène et le gaz additionnel, bien que l'on développe la même puissance qu'avec le brûleur de l'art antérieur, on observe que la puissance transférée par le brûleur mettant en oeuvre l'invention peut être plus faible compte-tenu des pertes de puissance dues aux volumes de fumées dans un certain domaine de puissance. Il a été observé que le brûleur selon l'art antérieur est limité à un fonctionnement, en puissance transférée et développée, dans une gamme de 7 à 10 kW car en dessous de 7 kW le brûleur ne peut fonctionner sans être détérioré par l'absence d'un flux suffisant de gaz (détérioration dans le domaine défini par la courbe en pointillés de type .....). Grâce au système selon l'invention, ce même brûleur peut voir sa gamme de fonctionnement s'élargir à 0,15 à 10 kW. On peut également souligner que le procédé et le dispositif selon l'invention permettent d'élargir la gamme de fonctionnement des brûleurs de l'art antérieur dans un domaine de puissance qui leur était inaccessible dans l'art antérieur même en les faisant fonctionner dans la gamme de puissance produisant leur détérioration et qui correspond à la courbe en pointillés de type ..... sur la figure 1 ; on observe que cette gamme de puissance dite détérioratrice ne peut descendre au delà de 1 kW en puissance transférée, alors que le procédé selon l'invention permet d'accéder à des puissances transférées comprises entre 0,15 et 1 kW.

Par mise en oeuvre du procédé et du système selon l'invention, il est possible de chauffer les canaux de distribution de verre fondu issu d'un four verrier en conservant les avantages des brûleurs oxycombustibles - à savoir plage de fonctionnement plus large que les brûleurs aéro-gaz également pour les puissances élevées, éventuellement flamme de longueur contrôlée, diminution de la consommation de combustible - tout en améliorant le profil de chauffe à basse puissance et sans détériorer le brûleur.

L'invention présente également l'avantage de permettre le maintien d'une pression stable dans les canaux de distribution du fait d'un débit de fumées plus important que lors de la combustion tout oxygène à faible puissance.

Du fait de la possibilité de travailler avec des brûleurs de faibles puissances, l'invention permet également de travailler avec un plus grand nombre de brûleurs présentant de plus faibles puissances : la chauffe peut ainsi être plus homogène et améliorer la qualité du transfert au verre.

De plus, bien que l'ajout complémentaire de gaz additionnel dans l'oxygène dégrade le rendement de combustion, il permet toutefois une régulation très fine de la puissance transférée au verre.

Le rendement de combustion est minimum lorsque les brûleurs fonctionnent à faible puissance. Toutefois à ces niveaux, le gain de combustible est potentiellement le plus faible. Ce procédé a peu d'impact sur le bilan économique.

Un autre avantage de l'invention est qu'elle permet un ajustement rapide de la puissance du brûleur en fonction de la nature du verre qui coule dans les canaux de distribution. Cet avantage est d'autant particulièrement important de nos jours en raison des modifications continuelles apportées aux verres produits pour suivre les effets de mode (couleurs, ...).

## Revendications

1. Procédé de contrôle du fonctionnement d'un brûleur assurant le chauffage des canaux de distribution de verre liquide issu d'un four verrier, ledit brûleur étant alimenté par un gaz combustible, de l'oxygène et par un gaz additionnel, **caractérisé :**
- **en ce que** la puissance du brûleur est variée en augmentant ou diminuant proportionnellement les débits de combustible et d'oxygène de manière à conserver un rapport stoechiométrique prédéfini constant et
- **en ce que** le débit de gaz additionnel est ajouté en complément de l'oxygène, ledit débit de gaz additionnel étant contrôlé de manière à ce que la somme du débit de gaz additionnel, du débit d'oxygène et du débit de gaz combustible soit supérieure ou égale au débit minimal de refroidissement du brûleur D_{MIN}.

2. Procédé selon la revendication 1, **caractérisé en ce que** le gaz additionnel est choisi parmi au moins l'un des gaz suivants: air, dioxyde de carbone, argon, hélium.

3. Procédé selon la revendication 1 ou 2, **caractérisé en ce que** le gaz additionnel est mélangé avec l'oxygène avant sa mise en contact avec le combustible.

4. Procédé selon l'une des revendications précédentes, **caractérisé en ce que** la valeur de D_{MIN} est fixée en fonction du débit de combustible.

5. Procédé selon l'une des revendications précédentes, **caractérisé en ce que** la somme du débit de gaz additionnel et du débit d'oxygène est supérieure ou égale au débit minimal de refroidissement du brûleur D_{MIN}.

6. Procédé selon l'une des revendications précédentes, **caractérisé en ce que** le débit de gaz additionnel est contrôlé par un détendeur inséré dans la ligne de délivrance de l'oxygène au brûleur.

7. Procédé selon l'une des revendications précédentes, **caractérisé en ce que** le brûleur comprend:
- un premier conduit pour le passage de l'oxygène,
- un second conduit coaxial au premier conduit et placé à l'intérieur dudit premier conduit pour le passage du combustible,
l'extrémité dudit second conduit étant placée en retrait de l'extrémité du premier conduit.

8. Procédé selon l'une des revendications 1 à 6, **caractérisé en ce que** le brûleur comprend:
- un premier conduit pour le passage de l'oxygène,
- un second conduit coaxial au premier conduit et placé à l'intérieur dudit premier conduit pour le passage du combustible,
- un embout placé à l'extrémité du premier conduit,
- une buse placée à l'extrémité du second conduit,
- un moyen permettant de faire tourbillonner le combustible placé sur la buse placée à l'extrémité du second conduit.

9. Procédé selon la revendication 8, **caractérisé en ce que** le moyen permettant de faire tourbillonner le combustible comprend un objet de forme allongée centré de manière aérodynamique à l'intérieur de la buse du second conduit, le diamètre interne de ladite buse étant supérieur au diamètre de l'objet de forme allongée du moyen permettant de faire tourbillonner le combustible.

10. Procédé selon la revendication 9, **caractérisé en ce que** l'objet de forme allongée du moyen permettant de faire tourbillonner le combustible comprend au moins une tige hélicoïdale sur une portion de sa longueur.

11. Procédé selon l'une des revendications 8 à 10, **caractérisé en ce que** le brûleur comprend un moyen permettant de faire tourbillonner le comburant placé sur l'embout placé à l'extrémité du premier conduit.

12. Procédé suivant l'une des revendications précédentes, ledit procédé étant mis en oeuvre au moyen d'un système de combustion comprenant:
- un brûleur oxy-combustible,
- un moyen d'alimentation du brûleur en combustible,
- un moyen d'alimentation du brûleur en comburant coopérant avec un moyen d'alimentation en oxygène et un moyen d'alimentation en un gaz additionnel,
- un moyen de mesure du débit d'au moins de l'oxygène ou du combustible,
- un moyen de contrôle du débit de gaz additionnel.

13. Procédé selon la revendication 12, **caractérisé en ce que** le moyen de contrôle du débit de gaz additionnel est asservi au moyen de mesure du débit d'au moins de l'oxygène ou du combustible.

14. Procédé selon la revendication 12 ou 13, **caractérisé en ce que** le moyen de contrôle du débit de gaz additionnel est un détendeur.

15. Procédé selon la revendication 12 ou 13, **caractérisé en ce que** le moyen de contrôle du débit de gaz additionnel est une servovalve.

## Patentansprüche

1. Kontrollverfahren des Funktionierens eines Brenners, der das Beheizen der Verteilkanäle für flüssiges Glas aus einem Glasschmelzofen gewährleistet, wobei der Brenner mit einem brennbaren Gas, Sauerstoff und einem Zusatzgas versorgt wird, **dadurch gekennzeichnet:**
- **dass** die Leistung des Brenners durch proportionales Steigern oder Verringern der Durchflussmengen an Brennstoff und Sauerstoff so geändert wird, dass ein konstantes, vordefiniertes stöchiometrisches Verhältnis beibehalten wird und
- **dass** die Durchflussmenge an Zusatzgas als Ergänzung zum Sauerstoff hinzugefügt wird, wobei die Durchflussmenge an Zusatzgas so kontrolliert wird, dass die Summe der Durchflussmengen an Zusatzgas, Sauerstoff und Brennstoff größer oder gleich dem minimalen Kühldurchsatz des Brenners D_{MIN} ist.

2. Verfahren nach Anspruch 1, **dadurch gekennzeichnet, dass** das Zusatzgas aus mindestens einem der folgenden Gase ausgewählt wird: Luft, Kohlendioxid, Argon, Helium.

3. Verfahren nach Anspruch 1 oder 2, **dadurch gekennzeichnet, dass** das Zusatzgas mit dem Sauerstoff gemischt wird, bevor es mit dem Brennstoff in Berührung kommt.

4. Verfahren nach einem der vorstehenden Ansprüche, **dadurch gekennzeichnet, dass** der Wert D_{MIN} der Durchflussmenge des Brennstoffs entsprechend festgelegt wird.

5. Verfahren nach einem der vorstehenden Ansprüche, **dadurch gekennzeichnet, dass** die Summe der Durchflussmengen an Zusatzgas und Sauerstoff größer oder gleich dem minimalen Kühldurchsatz des Brenners D_{MIN} ist.

6. Verfahren nach einem der vorstehenden Ansprüche, **dadurch gekennzeichnet, dass** die Summe der Durchflussmenge an Zusatzgas von einem Reduzierventil gesteuert wird, der in die Sauerstoffabgabeleitung an den Brenner eingefügt wird.

7. Verfahren nach einem der vorstehenden Ansprüche, **dadurch gekennzeichnet, dass** der Brenner Folgendes beinhaltet:
- eine erste Leitung zur Durchführung des Sauerstoffs,
- eine zweite, koaxial zur ersten verlaufende Leitung zur Durchführung des Brennstoffs, die innerhalb dieser ersten Leitung platziert ist,
wobei das Ende der zweiten Leitung bezüglich des Endes der ersten Leitung zurückgesetzt ist.

8. Verfahren nach einem der Ansprüche 1 bis 6, **dadurch gekennzeichnet, dass** der Brenner Folgendes beinhaltet:
- eine erste Leitung zur Durchführung des Sauerstoffs,
- eine zweite, koaxial zur ersten verlaufende Leitung zur Durchführung des Brennstoffs, die innerhalb dieser ersten Leitung platziert ist,
- ein am Ende der ersten Leitung platziertes Ansatzstück,
- eine am Ende der zweiten Leitung platzierte Düse,
- ein Mittel zum Verwirbeln des Brennstoffs auf der am Ende der zweiten Leitung platzierten Düse.

9. Verfahren nach Anspruch 8, **dadurch gekennzeichnet, dass** das Mittel zum Verwirbeln des Brennstoffs ein längliches Objekt enthält, das aerodynamisch in der Düse der zweiten Leitung zentriert ist, wobei der Innendurchmesser der Düse größer ist als der Durchmesser des länglichen Objekts des Mittels zum Verwirbeln des Brennstoffs.

10. Verfahren nach Anspruch 9, **dadurch gekennzeichnet, dass** das längliche Objekt des Mittels zum Verwirbeln des Brennstoffs mindestens einen gewundenen Schaft auf einem Abschnitt seiner Länge enthält.

11. Verfahren nach einem der Ansprüche 8 bis 10, **dadurch gekennzeichnet, dass** der Brenner ein Mittel zum Verwirbeln des Brennstoffs beinhaltet, das auf dem Ansatzstück am Ende der ersten Leitung platziert ist.

12. Verfahren nach einem der vorstehenden Ansprüche, wobei das Verfahren mittels eines Verbrennungssystems implementiert wird, das Folgendes beinhaltet:
- einen Sauerstoff-Brennstoffbrenner,
- ein Mittel zur Versorgung des Brenners mit Brennstoff,
- ein Mittel zur Versorgung des Brenners mit Verbrennungsgas, das gemeinsam mit einem Mittel zur Sauerstoffversorgung und einem Mittel zur Versorgung mit einem Zusatzgas funktioniert,
- ein Mittel zum Messen der Durchflussmenge von mindestens dem Sauerstoff oder dem Brennstoff,
- ein Mittel zur Steuerung der Durchflussmenge des Zusatzgases.

13. Verfahren nach Anspruch 12, **dadurch gekennzeichnet, dass** das Mittel zur Steuerung der Durchflussmenge des Zusatzgases mit dem Mittel zum Messen der Durchflussmenge von mindestens dem Sauerstoff oder dem Brennstoff geregelt wird.

14. Verfahren nach Anspruch 12 oder 13, **dadurch gekennzeichnet, dass** das Mittel zur Steuerung der Durchflussmenge des Zusatzgases ein Reduzierventil ist.

15. Verfahren nach Anspruch 12 oder 13, **dadurch gekennzeichnet, dass** das Mittel zur Steuerung der Durchflussmenge des Zusatzgases ein Servoventil ist.

## Claims

1. Method for controlling the operation of a burner which is used to heat feeder channels for molten glass originating from a glass furnace, said burner being supplied with a fuel gas, oxygen and an additional gas, **characterised:**
- **in that** the power of the burner is varied by proportionally increasing or decreasing the fuel and oxygen flow rates so as to preserve a predefined constant stoichiometric ratio, and
- **in that** the additional gas flow rate is injected in addition to the oxygen, said additional gas flow rate being controlled such that the sum of the additional gas flow rate, the oxygen flow rate and the fuel gas flow rate is greater than or equal to the minimum cooling flow rate of the burner D_{MIN}.

2. Method according to claim 1, **characterised in that** the additional gas is at least one member chosen from the group consisting of: air, carbon dioxide, argon and helium.

3. Method according to claim 1 or 2, **characterised in that** the additional gas is mixed with oxygen before being brought into contact with the fuel.

4. Method according to any of the previous claims, **characterised in that** the value of D_{MIN} is fixed as a function of the fuel flow rate.

5. Method according to any of the previous claims, **characterised in that** the sum of the additional gas flow rate and oxygen flow rate is greater than or equal to the minimum cooling flow rate of the burner D_{MIN}.

6. Method according to any of the previous claims, **characterised in that** the additional gas flow rate is controlled by an expansion valve inserted in the line feeding oxygen to the burner.

7. Method according to any of the previous claims, **characterised in that** the burner comprises:
- a first duct for the flow of oxygen,
- a second duct coaxial to the first duct and placed inside said first duct for the flow of fuel,
the end of said second duct being set back from the end of the first duct.

8. Method according to one of claims 1 to 6, **characterised in that** the burner comprises:
- a first duct for the flow of oxygen,
- a second duct coaxial to the first duct and placed inside said first duct for the flow of fuel,
- an end fitting placed at the end of the first duct,
- a nozzle placed at the end of the second duct,
- a means for swirling the fuel, positioned on the nozzle placed at the end of the second duct.

9. Method according to claim 8, **characterised in that** the means for swirling the fuel comprises an object of elongated shape which is centred in an aerodynamic manner inside the nozzle of the second duct, the inner diameter of said nozzle being greater than the diameter of the object of elongated shape of the means for swirling the fuel.

10. Method according to claim 9, **characterised in that** the object of elongated shape of the means for swirling the fuel comprises at least one helical rod on a portion of the length thereof.

11. Method according to one of claims 8 to 10, **characterised in that** the burner comprises a means for swirling the oxidising agent positioned on the end fitting placed at the end of the first duct.

12. Method according to any of the previous claims, said method being implemented by means of a combustion system comprising:
- an oxy-fuel burner,
- a means for supplying the burner with fuel,
- a means for supplying the burner with oxidising agent engaging with a means for supplying oxygen and a means for supplying an additional gas,
- a means for measuring the flow rate of at least the oxygen or the fuel,
- a means for controlling the additional gas flow rate.

13. Method according to claim 12, **characterised in that** the means for controlling the additional gas flow rate is slaved to the means for measuring the flow rate of at least the oxygen or the fuel.

14. Method according to claim 12 or 13, **characterised in that** the means for controlling the additional gas flow rate is an expansion valve.

15. Method according to claim 12 or 13, **characterised in that** the means for controlling the additional gas flow rate is a servo valve.
